# EUROPEAN PATENT APPLICATION

(11) **EP 1 734 718 A2**
(43) Date of publication of application: **20.12.2006**
(21) Application number: 05021656.3
(22) Date of filing: 04.10.2005
(51) Int. Cl.: H04L 29/06, H04L 12/22

(54) **Computer-implemented method with real-time response mechanism for detecting viruses in data transfer on a stream basis**

(30) Priority: 15.06.2005 US 160230
(71) Applicant: DrayTek Corp., Hsin-Chu Industrial Park, Hsin-Chu, Hsien (TW)
(72) Inventor: Yang, Tzu-Jian, Hsinchuang City Taipei Hsien (TW); Chang, Wei-Tai, Kao-Hsiung Hsien (TW)
(74) Representative: Schaeberle, Steffen

(57) **Abstract**

A computer-implemented and stream-based virus-detecting method which inspects packets for malicious contents in a network system scans each incoming packet forming input data for virus code. Depending on packet type, when a packet contains virus code, the method either removes the virus code, replaces a segment previously occupied by the virus code with information indicating the existence of the virus code and creates a modified packet by reconstructing a header and a checksum of the packet, or removes the virus without creating a modified packet, or withholds a last packet from reaching its destination address.

## Description

The present invention relates to a computer-implemented method for detecting a virus according to the pre-characterizing clause of claim 1.

With the rapid development in the computer industry, the widespread proliferation of computers prompts the development of computer networks that allow computers to communicate with each other. One significant computer network that has become the preferred data communication medium for a broad class of computer users is the Internet, commonly known as the "world-wide web", or WWW. A broad class of computer users, ranging from private individuals to large multi-national corporations, now routinely employs the Internet to access information, to distribute information, to correspond electronically, and even to conduct personal conferencing.

One particular problem that has plagued many computer applications results from computer viruses. Some individuals have developed computer viruses that may hinder the operation of computers. Whether a virus is intended simply as a practical joke or a planned attack on a computer network, vast amounts of damage may result. A computer virus is a program that disrupts operations of a computer by modifying other executable programs. A virus may also delete or corrupt crucial system files, user data files or application programs. Additionally, computer viruses may make copies of themselves to distribute to other computers connected to a communications network, thereby causing damage to computers at several locations.

A user at an individual PC or workstation (referred to as a "web client") that wishes to access the Internet typically does so using a software application known as a web browser. A web browser makes a connection via the Internet to other computers known as web servers, and receives information from the web servers that is rendered to the web client. One common type of information transmitted from a web server to a web client is known as a "web page", generally formatted using a specialized language called Hypertext Markup Language (HTML). Another type of information transmitted from a web server to a web client is e-mail messages and any files or other information attached to those messages. Yet another type of information transmitted from a web server to a web client are files that may be downloaded from a web site.

Various virus-checking techniques are implemented on the web servers and mail servers for protecting against possible network intrusion. The prior art virus-checking techniques implemented on a computer network scan files for virus signatures, searching in code fragments for known patterns used for viruses. Geared for virus detection in a compromised computer system, the prior art anti-virus software is designed to work on entire files and does not provide real-time monitoring of network traffic to protect the modern networked computer against breaches. Files are completely stored into a temporary space of a server installed with the anti-virus software, scanned for virus signatures, optionally cleaned of viruses, and may then be either blocked or passed on to the destination address. The prior art anti-virus method has several disadvantages. Since the virus scanning is not performed until the whole file has been downloaded, the prior art results in slowed network performance. Since a temporary space is required on the server, the download size of the file has limit.

Because of these performance problems and limitations of the prior art, it is desirable to develop a better virus-detecting method, a real-time virus removal and response mechanism for a network system.

This in mind, the present invention aims at providing a computer-implemented method with real-time response mechanism for detecting viruses in data transfer on a stream basis that reduces the performance problems and limitations of the prior art.

This is achieved by a computer-implemented method according to claim 1. The dependent claims pertain to corresponding further developments and improvements.

As will be seen more clearly from the detailed description following below, the claimed computer-implemented method includes steps of determining a type of a packet if input data comprises a plurality of packets, determining whether the packet contains virus code, and performing a predetermined action on the packet if the packet contains virus code.

In the following, the invention is further illustrated by way of example, taking reference to the accompanying drawings. Thereof
Fig. 1 is a network system installed with a virus-detecting method of the present invention,
Fig. 2 is a flowchart illustrating a virus-detecting method of the present invention,
Fig. 3 is a flowchart illustrating another embodiment of the present invention,
Fig. 4 is a flowchart connected to the link A of Fig. 3,
Fig. 5 is a flowchart connected to the link B of Fig. 3, and
Fig. 6 is a flowchart connected to the link C of Fig. 3.

The present invention provides a computer-implemented method for detecting viruses in data transfer on a stream basis. Unlike the prior art virus-detecting method that is designed to work on entire files, the present invention works on a stream basis and provides a real-time response mechanism once a malicious packet with virus code is detected.

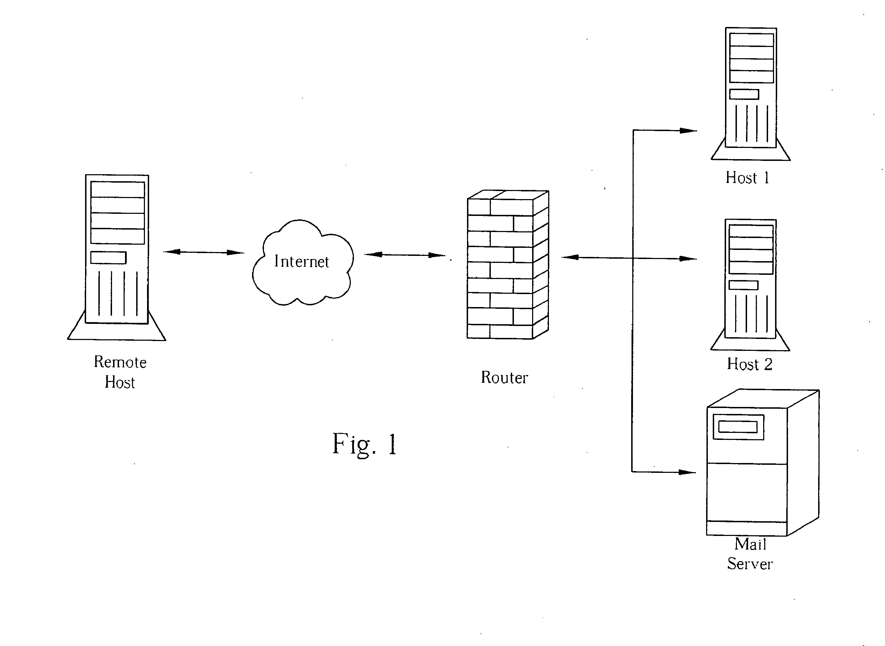

Please refer to Fig. 1 for a network system installed with a virus-detecting method of the present invention. The network system in Fig.1 operates on a packet-switching technology which most modern networks are based on. Packet switching is more efficient and robust for data that can withstand some delays in transmission, such as electronic mail (e-mail) messages. In a packet switching network system, a file is divided into a plurality of packets, which, together with control signals and possibly error information, are then transmitted to the destination address. The packet, control signals and the error control information are usually arranged in a specific format called protocol. A protocol determines the type of error checking to be used, the data compression method (if any), how the sending device will indicate that it has finished sending a message, and how the receiving device will indicate that it has received a message. Each packet is transmitted individually and packets can even follow different routes to the destination. Once all the packets forming a message arrive at the destination, they are recompiled into the original message.

In Fig. 1, the network system installed with the present virus-detecting method represents an e-mail system that comprises a router, a mail server and the Internet. The mail server provides services to several hosts, Host 1 and Host 2 (a plurality of hosts are possible), and is connected to a remote host through the router and the Internet. The remote host can be an attacker, an infected system or simply an innocent system free of viruses. A router is a network platform device that forwards data packets along networks and determines the best path for forwarding the packets. The present invention can be implemented on the router in Fig.1. The most common protocol for sending e-mail messages between clients and servers is called Simple Mail Transfer Protocol (SMTP). When the remote host sends an e-mail with SMTP to a user of Host 1 through the Internet, the packets forming the e-mail message arrives first at the router. The virus-detecting method of the present invention scans each packet for possible virus code before sending it to the mail server. If none of the packets forming the e-mail message contains virus code, the router records relevant information of each packet and then sends it to the destination address. Then the original e-mail message sent from the remote host is recomposed at the mail server. When a user of Host 1 uses a web browser to receive e-mails, the mail server then sends the message to Host 1. If virus code is detected in a packet forming the e-mail message, the present invention method removes the virus code and replaces the segment previously occupied by the virus code with information indicating the existence of the virus code. The present invention method then creates a modified packet by reconstructing a header and a checksum of the packet. After storing the relevant information on the router, the modified packet is sent to the mail server. A modified e-mail message, instead of the original e-mail message, is re-composed at the mail server. When a user of Host 1 accesses his mailbox, he receives this modified e-mail message notifying the existence and the removal of the virus in the original e-mail message.

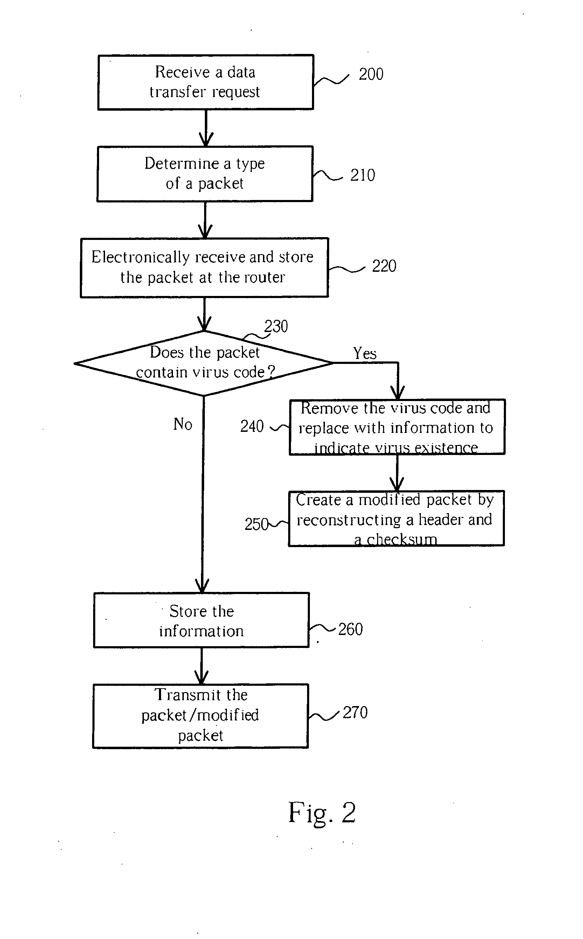

Please refer to Fig. 2 for a flowchart illustrating a computer-implemented and stream-based method with real-time response mechanism for detecting viruses in data transfer according to the present invention. The flowchart in Fig. 2 includes the following steps:
Step 200: receive a data transfer request at a router, the data transfer request including a destination address;
Step 210: if the input data comprises a plurality of packets, determine a type of a packet;
Step 220: electronically receive and store the packet at the router;
Step 230: determine whether the packet contains virus code; if the packet contains virus code, execute step 240; if not, execute step 260;
Step 240: remove the virus code and replace a segment previously occupied by the virus code with information indicating the existence of the virus code;
Step 250: create a modified packet by reconstructing a header and a checksum of the packet;
Step 260: storing the information of the packet at the router;
Step 270: transmit the packet or the modified packet to the destination address; and return to step 200.

The present invention method illustrated in Fig. 2 scans each incoming packet for existing virus code, and determines the next step based on the result. Unlike the prior art virus-detecting method, each incoming packet forming the input data is handled immediately instead of waiting for all of the packets to arrive. If a packet does not contain virus code, it is sent to its destination address; if a packet contains virus code, then the removal, header and checksum reconstruction steps of steps 240 and 250 in Fig. 2 are performed, and a modified packet with information indicating the existence of the virus code is sent to its destination address. In either case, each incoming packet is dealt with immediately when received by the router. Based on the data type, the predetermined format of the packet is firstly stored at the router; the packet is secondly scanned for virus code, optionally cleaned of viruses and optionally reconstructed, and then thirdly passed on to the destination address. In the present invention, since the router does not need to wait for all packets before performing virus scanning, the effectiveness of the network system is largely improved and the network communication is not interrupted. And since a packet naturally takes less space than a complete file, it requires less space at the router for temporary data storage. After completing the scanning and any necessary virus removal steps, the packet is sent to the destination address and the temporary space can be used again for subsequent packet storage. Therefore, the present invention does not have the download size limit as in the prior art. The flowchart in Fig. 2 shows how the virus-detecting method of the present invention is implemented on a router of an e-mail system for scanning e-mail messages with SMTP format. However, the present invention method is not limited to implementation on a router of an e-mail system, such as that illustrated in Fig. 1, it can also be implemented on other network platforms such as proxy server.

The method illustrated by steps in Fig. 2 can be applied to encapsulated format protocols, such as simple mail transfer protocol (SMTP), post office protocol 3 (POP3), hypertext transfer protocol (HTTP)...etc. Before a malicious packet is detected by the present invention method, information indicating how many packets forming an already-transmitted e-mail message is stored on the router. Based on this information and the type of the encapsulated format protocols, the present invention method can create a modified packet from the original malicious packet by executing step 250 in Fig. 2. However for packets with protocols that do not comprise an encapsulated format, such as FTP packets, although step 260 can still be executed to remove virus code, step 270 cannot be applied due to lack of an encapsulated format protocol. In other words, if a packet does not comprise a predetermined protocol, the header and the checksum of a malicious packet cannot be reconstructed due to lack of an agreed-upon format.

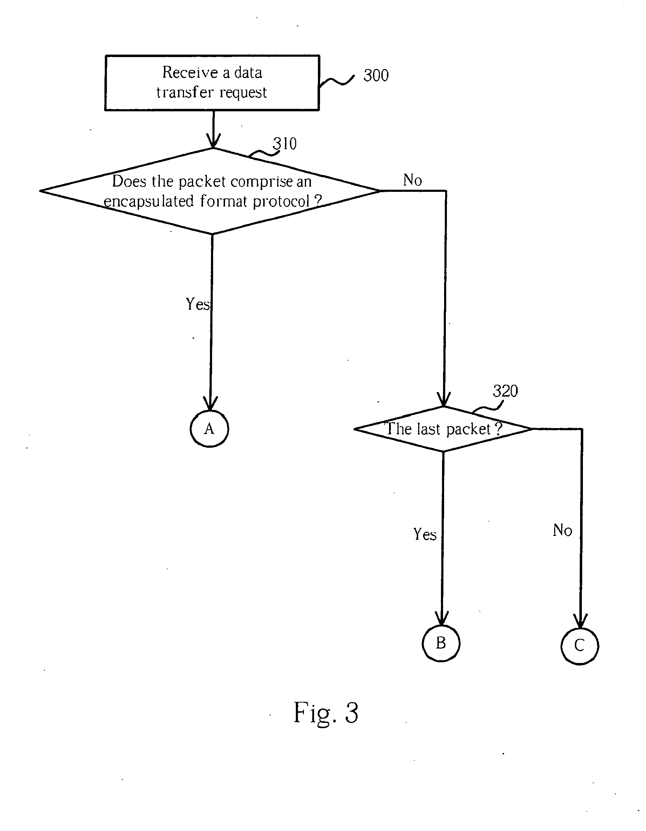

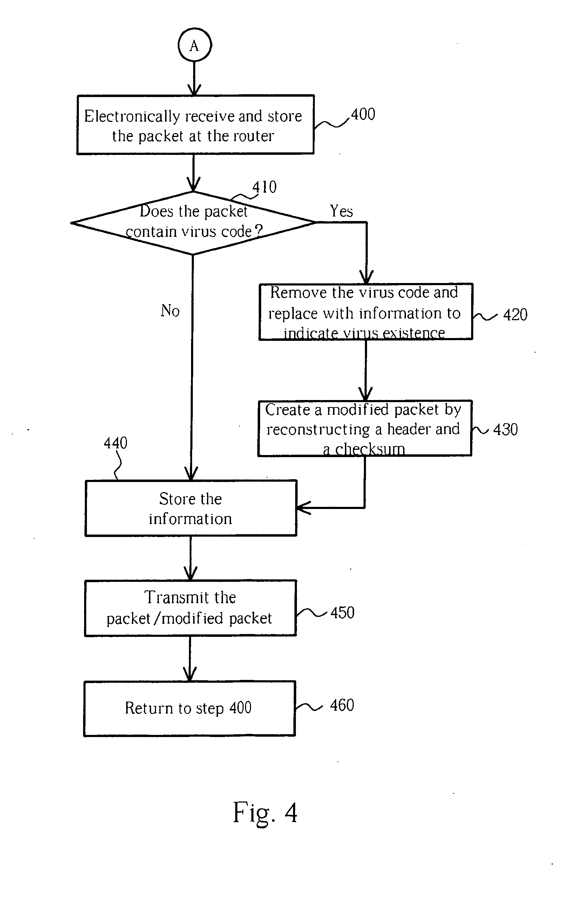

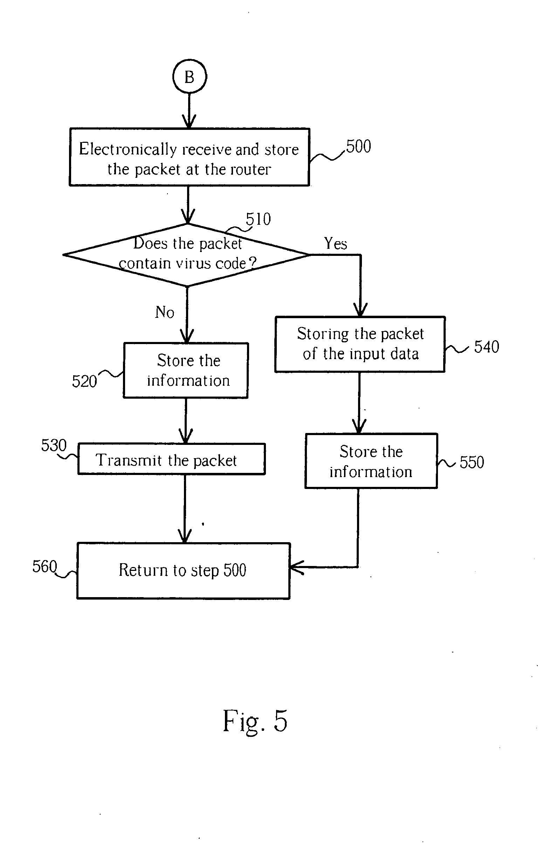

Please refer to Fig. 3 for another embodiment of the present invention. Fig. 3 illustrates the steps of another computer-implemented virus removal and response mechanism when detecting viruses with a stream-based method according to the present invention. In Fig. 3 different approaches are used for packets forming input data depending on the exact packet type. Packet types are typically the following: a packet with an encapsulated format protocol and a packet without an encapsulated format protocol. The steps in Fig. 3 are illustrated as follows:
Step 300: receive a data transfer request at a network platform, the data transfer request including a destination address;
Step 310: if the input data comprises a plurality of packets, determine if the plurality of packets comprise an encapsulated format protocol; if a packet comprises an encapsulated format protocol, refer to the flowchart shown in Fig. 4; if the packet does not comprise an encapsulated format protocol, execute step 320;
Step 320: determine if the packet is the last packet of the input data; if the packet is the last packet, refer to the flowchart shown in Fig. 4; if the packet is not the last packet, refer to the flowchart shown in Fig. 5.

Fig. 4 illustrates the flowchart connected to the link A of Fig. 3. This process is used if the packet forming the input data comprises an encapsulated format protocol. Fig. 4 includes the following steps:
Step 400: electronically receive and store the packet at the router;
Step 410: determine whether the packet contains virus code; if the packet contains virus code, execute step 420; if not, execute step 440;
Step 420: remove the virus code and replace a segment previously occupied by the virus code with information indicating the existence of the virus code;
Step 430: create a modified packet by reconstructing a header and a checksum of the packet;
Step 440: store the information of the packet at the network platform;
Step 450: transmit the packet or the modified packet to the destination address;
Step 460: return to step 400.

Fig. 5 illustrates the flowchart connected to the link B of Fig. 3. This process is used when the packet forming the input data does not comprise an encapsulated format protocol and when the packet is the last packet of the input data. Fig. 5 includes the following steps:
Step 500: electronically receive and store the packet at the router;
Step 510: determine whether the packet contains virus code; if the packet contains virus code, execute step 540; if not, execute step 520;
Step 520: store the information of the packet at the network platform;
Step 530: transmit the packet to the destination address; execute step 560;
Step 540: store the packet of the input data on the network platform and withhold the packet from the destination address;
Step 550: store the information of the packet at the network platform;
Step 560: return to step 500.

In the flowchart of Fig.5, when encountering virus code in a packet without an encapsulated format protocol and when the packet is the last packet of the input data received at the network platform, the present invention method uses another approach to prevent the virus from reaching the destination. Since the header and the checksum cannot be reconstructed after virus code has been removed from a malicious packet of this type, the present invention method keeps the last packet of the data on the network platform and withholds the last packet from reaching the destination address. By keeping the last packet of the data, it is not possible to recompose the original data at the client side. Therefore the present invention method can successfully prevent a virus in a packet without an encapsulated format protocol from spreading without influencing the original communication.

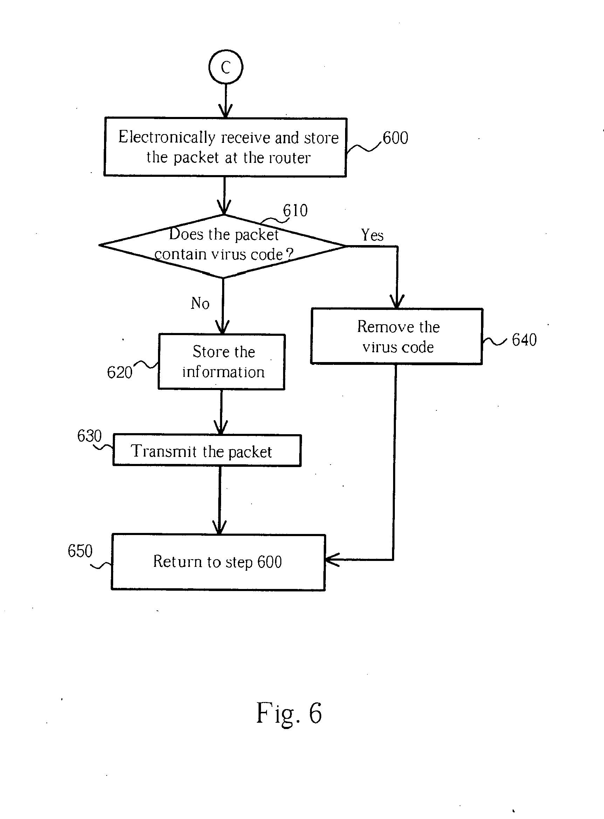

Fig. 6 illustrates the flowchart connected to the link C of Fig. 3. This process is used when the packet forming the input data does not comprise an encapsulated format protocol and when the packet is not the last packet of the input data. Fig. 6 includes the following steps:
Step 600: electronically receive and store the packet at the router;
Step 610: determine whether the packet contains virus code; if the packet contains virus code, execute step 640; if not, execute step 620;
Step 620: store the information of the packet at the network platform;
Step 630: transmit the packet to the destination address; execute step 650;
Step 640: remove the virus code; execute step 650;
Step 650: return to step 600.

In the process of Fig.6, when encountering virus code in a packet without an encapsulated format protocol and when the packet is not the last packet of the input data received at the network platform, the present invention method uses another approach to prevent the virus from reaching the destination. If a packet does not comprise an encapsulated format protocol, the header and the checksum of a malicious packet cannot be reconstructed due to lack of an agreed-upon format. The present invention method instead removes the virus code without creating a modified packet.

Provided that substantially the same results are achieved, the steps of the flowchart of Figs. 2-6 need not be in the exact order shown and need not be contiguous, that is, other steps can be intermediate.

The prior art virus-detecting method is designed to operate on complete files and hence has several disadvantages such as slow system performance and download size limitations. The present invention functions on a packet basis. Using a temporary space at a network platform, the present invention scans each incoming packet for malicious content immediately instead of waiting for the complete file to be downloaded. Unlike the prior art method, the present invention provides a real-time response mechanism for virus detection in data transfer in a network system that features better system efficiency without affecting the original communication. Also, by scanning each packet instead of the complete file, only small space at the network platform is required for temporary data storage. Therefore the present invention does not have the download size limitations in the prior art method. In conclusion, the present invention provides a real-time and efficient virus-detecting method used for network system.

## Claims

1. A computer-implemented method with real-time response mechanism for detecting viruses in data transfer on a stream basis, the method comprising:
receiving a data transfer request at a network
platform, the data transfer request including a destination address;
electronically receiving a packet at the network platform;
**characterised by**:
if input data comprises a plurality of packets, determining a type of the packet;
determining whether the packet contains virus code; and
- performing a predetermined action on the packet if the packet contains virus code.

2. The method of claim 1 **characterised in that** the packet is determined to comprise a predetermined protocol with an encapsulated format, and the predetermined action comprises:
removing the virus code and replacing a segment
previously occupied by the virus code with information indicating the existence of the virus code;
creating a modified packet by reconstructing a header and a checksum of the packet;
storing the information on the network platform; and
transmitting the modified packet to the destination address.

3. The method of claim 2 further **characterised by** transmitting the packet to the destination address if the packet does not contain virus code.

4. The method of claim 1 **characterised in that** the packet is determined to comprise a predetermined protocol without an encapsulated format, the method further comprising:
determining if the packet is the last packet of the
input data received at the network platform.

5. The method of claim 4 **characterised in that** the packet is the last packet of the input data received at the network platform, and the predetermined action comprises:
storing the packet on the network platform and
withholding the packet from the destination address if the packet contains virus code.

6. The method of claim 4 **characterised in that** the packet is not the last packet of the input data received at the network platform, and the predetermined action comprises:
removing the virus code and withholding the packet to
the destination address if the packet contains virus code.

7. The method of claim 1 **characterised in that** determining whether the packet contains a virus is performed by storing the packet at the network platform and by scanning data of the packet using the network platform.

8. The method of claim 1 **characterised in that** the network platform comprises a router or a proxy server.

9. The method of claim 2 **characterised in that** the predetermined protocol comprises an encapsulated format.

10. The method of claim 9 **characterised in that** the predetermined protocol with the encapsulated format comprises a protocol selected from a group consisting of a simple mail transfer protocol (SMTP), a post office protocol 3 (POP3), a hypertext transfer protocol (HTTP), and an Internet message access protocol (IMAP).
